# EUROPEAN PATENT SPECIFICATION

(11) **EP 4 413 862 B1**
(45) Date of publication and mention of the grant of the patent: **14.10.2026**
(21) Application number: 24155785.9
(22) Date of filing: 05.02.2024
(51) Int. Cl.: A21C 9/06

(54) **DEVICE FOR APPLYING A PREFORMED PORTIONED MALLEABLE MASS**
VORRICHTUNG ZUM AUFBRINGEN EINER VORGEFORMTEN PORTIONIERTEN VERFORMBAREN MASSE
DISPOSITIF POUR APPLIQUER UNE MASSE MALLÉABLE PRÉFORMÉE

(30) Priority: 08.02.2023 NL 2034118; 22.05.2023 NL 2034873
(43) Date of publication of application: 14.08.2024
(73) Proprietor: Radie B.V., 4104 BC Culemborg (NL)
(72) Inventor: van Blokland, Johannes Josephus Antonius, Culemborg (NL)
(74) Representative: IP Maison

(56) References cited:
- EP-A2- 1 454 529
- EP-B1- 1 090 839
- ES-T3- 2 279 086
- IT-A1- MI20 100 156
- US-A- 5 992 687
- US-A1- 2015 366 222
- US-A1- 2021 100 255
- DATABASE WPI Week 2021014, Derwent World Patents Index; AN 2021-13135V, XP002810621

## Description

The present invention relates to a method and device for applying a preformed portioned malleable mass, in particular a mass for filling a dough product, such as minced meat. Methods and devices for this purpose are known in the art, for instance from US patent publications US 5 992 687 and US 2014 144 543. In these devices pistons are used to eject the mass from the device, wherein there is an aid by compressed air through the piston head for assisting to release any mass clogging to the piston head. It is also known, from Chinese patent application CN 11 2273 402 to use oil as a pressure means for releasing dough. This has nothing to do with the present invention however.

Such devices have the disadvantage that there is always a remainder of the mass on the piston, which is not hygienic and may lead to contamination that can in a further stage cause malfunctioning of the device. Additionally, it may be important that a shape of the malleable mass, dictated by the shape of the mould, is remained when releasing said mass. Sticking of the mass in the mould may have an impact on said shape, which is an unwanted effect.

It is therefore a goal of the present invention to provide a method and device that take away the above mentioned disadvantages, or at least to provide a useful alternative to the prior art.

The invention thereto proposes a device for applying a preformed portioned malleable mass, comprising a hollow space, provided with at least one closable exit opening, a piston that can be moved back and forth in at least a part of the hollow space with at least a directional component from and to the at least one closable exit opening and preferably in a direction directed from and towards the at least one closable exit opening, which piston is movable between at least a retracted position in which the part of the space is released by the piston; and an ejected position in which the part of the space is fully occupied, a mass supply channel for the malleable mass exit opening onto the part of the space that is released in the retracted position of the piston, a valve for the closable exit opening which is movable between a position closing the exit opening and a position releasing the exit opening and a supply channel for a medium, such as air, under pressure, in particular leading through the piston to a side of the piston facing the exit opening, for bringing the hollow space under medium pressure.

The hollow space functions as a mould, for forming the portion of the malleable mass into the desired form. For that purpose, it may have an inner shape that the closeable exit opening allows to add the medium to the (closed) space, prior to releasing the malleable mass. This bias pressure facilitates a quick and smooth release, but the presence of the valve also allows to form a pressurized cavity between the piston and the malleable mass which avoids the malleable mass to reach the piston and thus to stick thereto and to contaminate the piston.

For making sure that the malleable mass is completely released, at least a part of the piston is substantially form-fitting with a wall part of the space. Normally, such wall has a shape that is circumferencial with respect to the piston head end. The piston may or may not be provided with scraping means or a sealing.

The piston is spaced from the mass supply channel in the retracted position. This allows to create a medium-filled separation between the piston head and the mass, which prevents the mass touching the piston. The piston should be spaced apart form the mass supply channel to such extend that the medium filled separation forms a barrier that is able to withstand the malleable mass when it is supplied to the space. Such supply also implies a certain speed and pressure on the malleable mass. As a rule of thumb, the extend to which the piston is spaced from the mass supply channel is such that a part of the closed space extending between the mass supply channel and a part of the piston forming a boundary of the space is at least 10 %, preferably at least 25% and more preferably at least 50% of the volume of the remainder of the closed space.

In the ejected position, the piston is adjacent to the exit opening. As a result, the closed space is completely occupied by the piston which reduces or even eliminates the chance of malleable mass remaining in the space.

The valve may be formed by a slide, in particular a slide that is movable in the plane in which the exit opening extends. Although the malleable mass may touch and even adhere to the valve, this direction of movement contributes to a full realease of the malleable mass and to the mass keeping its moulded shape.

The device according to the invention is arranged for, in particular by comprising or being coupled to a controller configured for performing the steps of:
a. Positioning the valve in the position closing the exit opening;
b. Positioning the piston into the retracted position;
c. Applying a medium, in particular a gas, such as air, through the supply channel;
d. Supplying a portion of malleable mass to the hollow space via the mass supply channel;
e. Bringing the valve into the position releasing the exit opening;
f. Moving the piston to the ejected position.

Herein, the medium may be applied under a superatmospheric pressure, and in particular under a higher pressure than the malleable mass is provided under. The pressure may depend on the malleable mass to be dispensed, but in general have a value between 0 and 2 bar.

To control the flow of the malleable mass in the hollow space, and especially to avoid the malleable mass touching the piston, steps c and d take place at least partly simultaneously, so that there is always a pressure barrier pushing the malleable mass when entering the hollow space.

Also steps c and f may take place at least partly simultaneously, that is, medium may still be applied during movement of the piston, so that the malleable mass is pushed ahead of the piston by the medium.

When multiple portioned malleable mass pieces are to be delivered, steps a to f may be repeated, in particular in the above indicated sequence.

The invention further relates to a method for applying a preformed portioned malleable mass, comprising the steps of:
- Supplying a portion of malleable mass to a closed hollow space;
- Applying a medium, in particular a gas, such as air, to the hollow space, such that a first side of the hollow space is filled with the portioned malleable mass and a second side of the hollow space is filled with the medium;
- Exit opening the closed hollow space at the first side where the portioned malleable mass is located;
- Pushing the portioned malleable mass out of the now opened hollow space in a direction from the second side to the first side, while still applying the medium from said same side.

In particular wherein the step of pushing takes place contactless, with the medium applied to the malleable mass from a piston head end.

The invention will now be illucidated into more detail with reference to the following figures, wherein:
- Figure 1 shows a perspective view of a device according to the invention;
- Figure 2 shows a cross section of a device from figure 1; and
- Figures 3 a-d show method steps according to the invention;

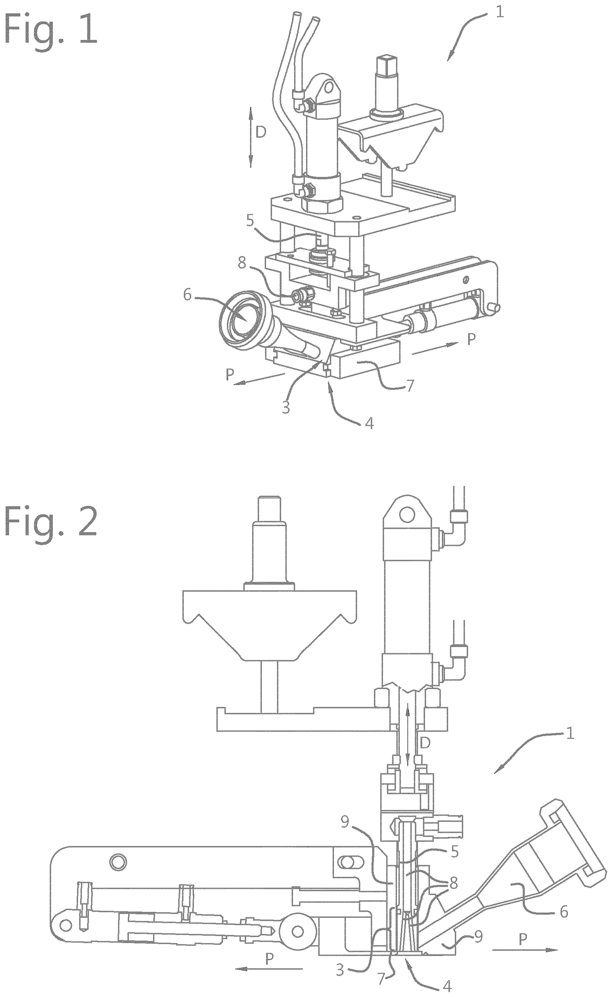

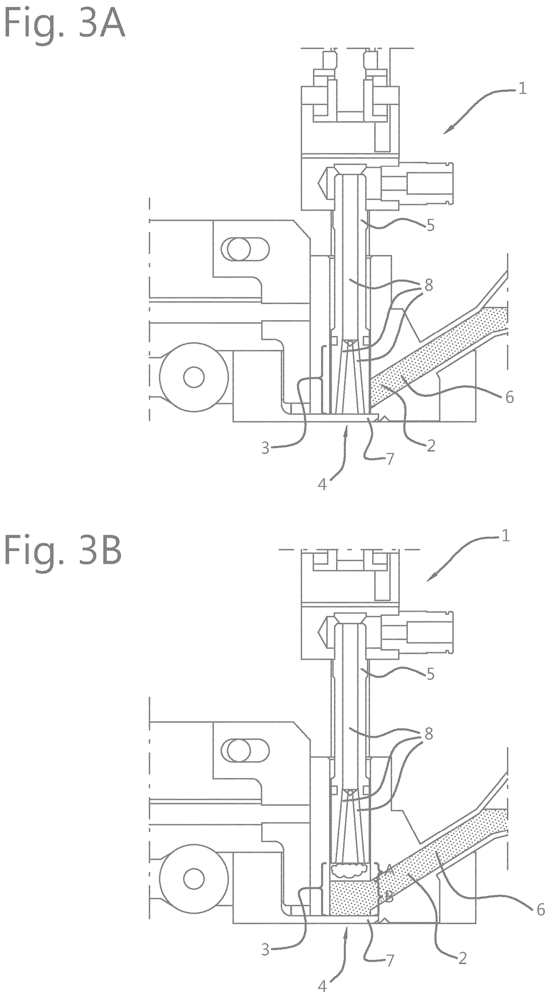

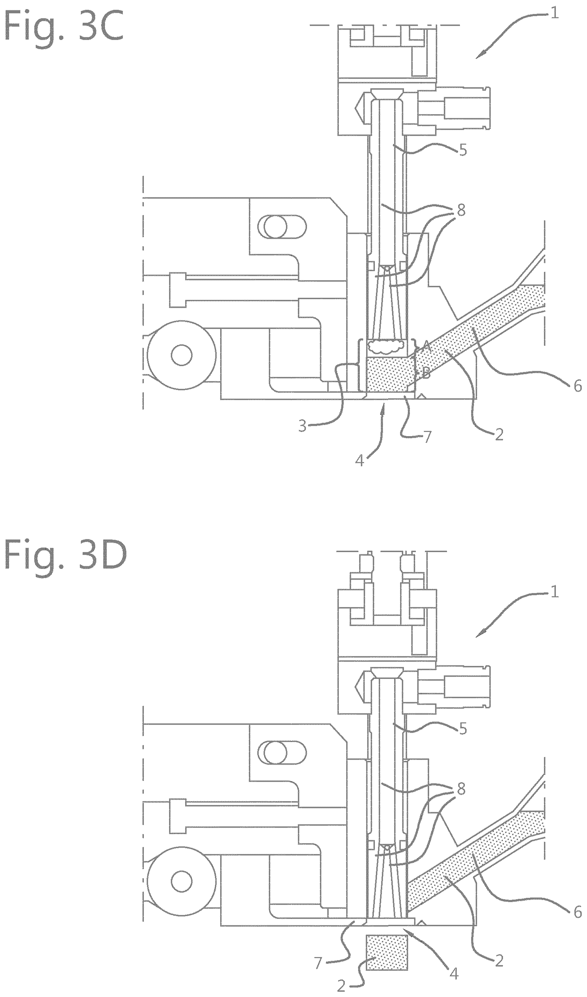

Figures 1 and 2 shows a device 1 for applying a preformed portioned malleable mass 2 (visible in Figures 3 a-d ), comprising a hollow space 3, provided with a closable exit opening 4, a piston 5 that can be moved back and forth in at least a part of the hollow space 3 with at least a directional component D from and to the at least one closable exit opening 4 and in the case shown in a direction D directed from and towards the at least one closable exit opening 4, which piston 5 is movable is between a retracted position (shown in figure 3a) in which the part of the space 3 is released by the piston 5; and an ejected position (shown in figure 2) in which the part of the space 3 is fully occupied by the piston 5, a mass supply channel 6 for the malleable mass opening onto the part of the space 3 that is released in the retracted position of the piston 5, a valve 7 for the closable exit opening 4 which is movable between a position closing the exit opening 4 and a position releasing the exit opening 4 and a supply channel 8 for a medium, such as air, under pressure, leading through the piston 5 to a side of the piston 5 facing the exit opening, for bringing the hollow space 3 under medium pressure. A part of the piston 5 is substantially form-fitting with a wall part 9 of the space 3. Figure 2 shows the situation wherein the piston 5 is in the ejected position adjacent to the exit opening 4. The valve 7 is formed by a slide that is movable in the plane P in which the exit opening 4 extends.

Figure 3a shows a first stage, wherein the piston 5 is positioned in the ejected position. The valve 7 is in the position closing the exit opening 4. The hollow space 3 is fully occupied by the piston. As a first step, the piston 5 is moved into the retracted position. This stage is shown in figure 3b. After that is done, simultaneously a medium, in particular a gas, such as air, is applied through the supply channel 8 and a portion of malleable mass 2 is supplied to the hollow space 3 via the mass supply channel 6. As a next step, the valve 7 is brought into the position releasing the exit opening, shown in figure 3c.

Both figure 3b and figure 3c show the extend to which the piston 6 in its retracted position is spaced from the mass supply 6 channel, such that a part A of the closed space 3 extending between the mass supply channel and a part of the piston forming a boundary of the space is about 50% of the volume of the remainder B of the closed space 3.

Figure 3d shows how the piston is finally moved to the ejected position, discharging the malleable mass 2. From this stage it may return to the stage shown in figure 3a again.

The above figures are examples only and in no sense meant to limit the scope of the present invention as defined in the following claims.

## Claims

1. Device (1) for applying a preformed portioned malleable mass 2, comprising:
- a hollow space (3), provided with at least one closable exit opening;
- a piston (5) that can be moved back and forth in at least a part of the hollow space (3) with at least a directional component from and to the at least one closable exit opening and preferably in a direction directed from and towards the at least one closable exit opening, which piston is movable is between at least:
∘ a retracted position in which the part of the space is released by the piston; and
∘ an ejected position in which the part of the space is fully occupied;
- a mass (2) supply channel for the malleable mass, opening onto the part of the space (3) that is released in the retracted position of the piston;
- a valve (7) for the closable exit opening which is movable between a position closing the exit opening and a position releasing the exit opening;
a supply channel for air, under pressure, leading through the piston (5) to a side of the piston 5 facing the exit opening, for bringing the hollow space (3) under air pressure wherein
- the piston (5) is spaced from the mass supply channel in the retracted position; and
- the piston (5) in the ejected position is adjacent to the exit opening;
and wherein the device comprises a controller configured for performing the following steps in sequence:
a. Positioning the valve (7) in the position closing the exit opening;
b. Positioning the piston (5) into the retracted position;
c. Applying air, through the supply channel;
d. Supplying a portion of malleable mass (2) to the hollow space via the mass (2) supply channel;
e. Bringing the valve (7) into the position releasing the exit opening;
- f. Moving the piston (5) to the ejected position.

2. Device (1) according to claim 1, wherein at least a part of the piston is substantially form-fitting with a wall part of the space.

3. Device (1) according to any of the preceding claims, wherein the valve is formed by a slide, in particular a slide that is movable in the plane in which the exit opening extends.

4. Device (1) according to any of the preceding claims, wherein the medium is applied under a superatmospheric pressure.

5. Device (1) according to any of the preceding claims, wherein steps c and d take place at least partly simultaneously.

6. Device (1) according to any of the preceding claims, wherein steps c and f take place at least partly simultaneously.

7. Device (1) according to any of the preceding claims, further configured for repeating steps a to f.

## Patentansprüche

1. Vorrichtung (1) zum Aufbringen einer vorgeformten portionierten verformbaren Masse (2), aufweisend:
- Einen Hohlraum (3), der mit zumindest einer schließbaren Austrittsöffnung versehen ist;
- Einen Kolben (5), der in zumindest einem Teil des Hohlraums (3) vor- und zurückbewegbar ist, mit zumindest einer Richtungskomponente von der zumindest einen schließbaren Austrittsöffnung weg und auf sie zu und vorzugsweise in einer Richtung, die sich von der zumindest einen schließbaren Austrittsöffnung weg und auf sie zu erstreckt, wobei dieser Kolben mindestens beweglich ist zwischen:
∘ Einer Rückfahrstellung, in der der Teil des Raums von dem Kolben freigegeben ist; und
∘ Einer Ausfahrstellung, in der der Teil des Raums gänzlich ausgefüllt ist;
- Einen Kanal für die Zufuhr von Masse (2) für die verformbare Masse, der sich in den Teil des Raums (3) hinein öffnet, der in der Rückfahrstellung des Kolbens freigegeben ist;
- Ein Ventil (7) für die schließbare Austrittsöffnung, das zwischen einer Stellung beweglich ist, in der es die Austrittsöffnung schließt, und einer Stellung, in der es die Austrittsöffnung freigibt;
Einen Zufuhrkanal für Druckluft, welcher durch den Kolben (5) hindurch zu einer Seite des Kolbens (5) hin verläuft, die zur Austrittsöffnung weist, um den Hohlraum (3) unter Luftdruck zu setzen, wobei
- Der Kolben (5) in der Rückfahrstellung von dem Kanal für die Zufuhr von Masse beabstandet ist; und
- Sich der Kolben (5) in der Ausfahrstellung nahe der Austrittsöffnung befindet;
und wobei die Vorrichtung eine Steuerung aufweist, die ausgebildet ist, die nachfolgenden Schritte in einer Folge zu vollführen:
a. Positionieren des Ventils (7) in der Stellung, in der es die Austrittsöffnung schließt;
b. Verbringen des Kolbens (5) in die Rückfahrstellung;
c. Zuführen von Luft über den Zufuhrkanal;
d. Einbringen einer Portion an verformbarer Masss (2) über den Kanal für die Zufuhr von Masse (2) in den Hohlraum;
e. Verbringen des Ventils (7) in die Stellung, in der es die Austrittsöffnung freigibt;
- f. Bewegen des Kolbens (5) in die Ausfahrstellung.

2. Vorrichtung (1) gemäß Anspruch 1, bei der zumindest für einen Teil des Kolbens im Wesentlichen Formschluss mit einem Wandteil des Raums besteht.

3. Vorrichtung (1) gemäß einem der vorhergehenden Ansprüche, bei der das Ventil durch einen Schlitten gebildet ist, insbesondere durch einen Schlitten, der in der Ebene, in der sich die Austrittsöffnung erstreckt, bewegbar ist.

4. Vorrichtung (1) gemäß einem der vorhergehenden Ansprüche, bei der das Medium unter Überatmosphärendruck zugeführt wird.

5. Vorrichtung (1) gemäß einem der vorhergehenden Ansprüche, bei der die Schritte c und d zumindest zum Teil zeitgleich erfolgen.

6. Vorrichtung (1) gemäß einem der vorhergehenden Ansprüche, bei der die Schritte c und f zumindest zum Teil zeitgleich erfolgen.

7. Vorrichtung (1) gemäß einem der vorhergehenden Ansprüche, die ferner zum Wiederholen der Schritte a bis f ausgebildet ist.

## Revendications

1. Dispositif (1) pour appliquer une masse malléable en portions préformée 2, comprenant :
- un espace creux (3), pourvu d'au moins une ouverture de sortie refermable ;
- un piston (5) qui peut être déplacé en va-et-vient dans au moins une partie de l'espace creux (3) avec au moins un composant directionnel à partir et vers l'au moins une ouverture de sortie refermable et de préférence dans une direction dirigée à partir et vers l'au moins une ouverture de sortie refermable, lequel piston est mobile entre au moins :
∘ une position rétractée dans laquelle la partie de l'espace est libérée par le piston ; et
∘ une position éjectée dans laquelle la partie de l'espace est complètement occupée ;
- un canal d'alimentation en masse (2) pour la masse malléable, débouchant sur la partie de l'espace (3) qui est libérée dans la position rétractée du piston ;
- une soupape (7) pour l'ouverture de sortie refermable qui est mobile entre une position fermant l'ouverture de sortie et une position libérant l'ouverture de sortie;
un canal d'alimentation en air, sous pression, débouchant à travers le piston (5) vers un côté du piston 5 faisant face à l'ouverture de sortie, pour mettre l'espace creux (3) sous pression aéraulique, dans lequel
- le piston (5) est espacé du canal d'alimentation en masse dans la position rétractée ; et
- le piston (5) dans la position éjectée est adjacent à l'ouverture de sortie ;
et dans lequel le dispositif comprend une unité de commande configurée pour effectuer les étapes suivantes en séquence :
- a. Positionnement de la soupape (7) dans la position de fermeture de l'ouverture de sortie ;
- b. Positionnement du piston (5) dans la position rétractée ;
- c. Application de l'air, à travers le canal d'alimentation ;
- d. Fourniture d'une partie de masse malléable (2) à l'espace creux via le canal d'alimentation en masse (2) ;
- e. Mise de la soupape (7) dans la position libérant l'ouverture de sortie ;
- f. Déplacement du piston (5) vers la position éjectée.

2. Dispositif (1) selon la revendication 1, dans lequel au moins une partie du piston est sensiblement en ajustement de forme avec une partie de paroi de l'espace.

3. Dispositif (1) selon l'une des revendications précédentes, dans lequel la soupape est formée par un tiroir, en particulier un tiroir qui est mobile dans le plan dans lequel s'étend l'ouverture de sortie.

4. Dispositif (1) selon l'une des revendications précédentes, dans lequel le milieu est appliqué sous une pression super-atmosphérique.

5. Dispositif (1) selon l'une des revendications précédentes, dans lequel les étapes c et d se déroulent simultanément au moins en partie.

6. Dispositif (1) selon l'une des revendications précédentes, dans lequel les étapes c et f se déroulent simultanément au moins en partie.

7. Dispositif (1) selon l'une des revendications précédentes, configuré en outre pour répéter les étapes a à f.
